# EUROPEAN PATENT APPLICATION

(11) **EP 4 683 336 A1**
(43) Date of publication of application: **21.01.2026**
(21) Application number: 24769835.0
(22) Date of filing: 07.03.2024
(51) Int. Cl.: H04N 21/482

(54) **VIDEO PROCESSING METHOD, APPARATUS AND DEVICE, AND STORAGE MEDIUM**

(30) Priority: 15.03.2023 CN 202310250737
(71) Applicant: Beijing Zitiao Network Technology Co., Ltd., Beijing 100190 (CN)
(72) Inventor: CHE, Wanli, Beijing 100028 (CN); ZHAO, Xi, Beijing 100028 (CN); XU, Ye, Beijing 100028 (CN)
(74) Representative: Grünecker Patent- und Rechtsanwälte PartG mbB
(86) International application number: PCT/CN2024/080462
(87) International publication number: WO 2024/188142

(57) **Abstract**

The present disclosure provides a method, apparatus, device and storage medium for video processing. The method includes: first, in response to a preset trigger operation on a first playback page corresponding to a first video, obtaining playback progress of the first video, and displaying a second playback page; then, continuing to play the first video based on the playback progress in a preset playback window on the second playback page; and presenting a related recommended video list of the first video in a preset area on the second playback page, wherein the related recommended video list of the first video includes at least one recommended video corresponding to the first video. Apparently, in the embodiments of the present disclosure, the related recommended video list of the first video is presented while the first video is played, so that the user may browse the related recommended video of the first video in the process of watching the first video. Therefore, the video-based interaction functions are enriched, and the video interaction experience of the user is improved.

## Description

This application claims priority to Chinese Patent Application No. 2023102507378, filed on March 15, 2023 and entitled "METHOD, APPARATUS, DEVICE AND STORAGE MEDIUM FOR VIDEO PROCESSING ", the disclosure of which is incorporated herein by reference in its entirety.

### FIELD

The present disclosure relates to the field of data processing, and in particular, to a method, apparatus, device and storage medium for video processing.

### BACKGROUND

With the continuous development of video processing technology, people have increasingly diversified demands for video-related functions. Therefore, how to enrich video-related functions, meet more demands of users and thereby improve user experience is an urgent technical problem to be solved.

### SUMMARY

The present disclosure provides a method of video processing, apparatus, device and storage medium, which can enrich video-based interaction functions and improve user experience.

**In** a first aspect, the present disclosure provides a method of video processing, the method including:
in response to a preset trigger operation on a first playback page corresponding to a first video, obtaining playback progress of the first video, and displaying a second playback page;
continuing to play the first video based on the playback progress in a preset playback window on the second playback page; and
presenting a related recommended video list of the first video in a preset area on the second playback page, wherein the related recommended video list of the first video includes at least one recommended video corresponding to the first video.

**In** an optional implementation, the method further includes:
in response to a selection operation for a target recommended video in a related recommended video list of the first video, switching playback from the first video to the target recommended video in the preset playback window; and
switching from presenting the related recommended video list of the first video to a related recommended video list of the target recommended video in the preset area, wherein the related recommended video list of the target recommended video includes at least one recommended video corresponding to the target recommended video.

In an optional implementation, continuing to the play the first video based on the playback progress in the preset playback window on the second playback page includes:
reducing display of a window on the first playback page, in which the first video is played, to a preset playback window on the second playback page, and continuing to play the first video based on the playback progress.

In an optional implementation, at least one recommendation label corresponding to the first video is provided on the second playback page, the method further including:
in response to a selection operation for a target recommendation label in the at least one recommendation label, switching from presenting the related recommended video list of the first video to a recommended video list corresponding to the target recommendation label in the preset area on the second playback page, wherein the recommended video list corresponding to the target recommendation label includes at least one recommended video determined based on the target recommendation label.

In an optional implementation, before obtaining the playback progress of the first video in response to the preset trigger operation on the first playback page corresponding to the first video, the method further includes:
in response to a preset trigger operation for theme content of the first video, presenting complete theme content of the first video on the first playback page corresponding to the first video, and presenting a partial cover of the at least one recommended video corresponding to the first video at a preset position on the first playback page.

In an optional implementation, presenting the related recommended video list of the first video in the preset area on the second playback page includes:
in response to a preset sliding operation on a first playback page corresponding to a first video, pulling out the related recommended video list of the first video from the preset position on the first playback page and presenting the related recommended video list of the first video in the preset area on the second playback page.

In an optional implementation, the method further includes:
in response to a preset sliding operation in the preset area, sliding-presenting the related recommended video list of the first video in the preset area.

In a second aspect, the present disclosure provides an apparatus for video processing, the apparatus including:
a display module configured to, in response to a preset trigger operation on a first playback page corresponding to a first video, obtain playback progress of the first video, and display a second playback page;
a playback module configured to continue to play the first video based on the playback progress in a preset playback window on the second playback page; and
a presenting module configured to present a related recommended video list of the first video in a preset area on the second playback page, wherein the related recommended video list of the first video includes at least one recommended video corresponding to the first video.

In a third aspect, the present disclosure provides a computer-readable storage medium, storing instructions thereon, wherein the instructions, when running on a terminal device, cause the terminal device to implement the foregoing method.

In a fourth aspect, the present disclosure provides a video processing device, including: a memory, a processor, and a computer program stored on the memory and runnable on the processor, wherein the computer program, when executed by the processor, implements the foregoing method.

In a fifth aspect, the present disclosure provides a computer program product, including a computer program/instruction which, when executed by a processor, implements the foregoing method.

Compared with the prior art, the technical solutions provided by the embodiments of the present disclosure have at least the following advantages:

In the method of video processing provided by the embodiments of the present disclosure, first, in response to a preset trigger operation on a first playback page corresponding to a first video, playback progress of the first video is obtained, and a second playback page is displayed; then, the first video continues to be played based on the playback progress in a preset playback window on the second playback page; and a related recommended video list of the first video is presented in a preset area on the second playback page, wherein the related recommended video list of the first video includes at least one recommended video corresponding to the first video. Apparently, in the embodiments of the present disclosure, the related recommended video list of the first video is presented while the first video is played, so that the user may browse the related recommended video of the first video in the process of watching the first video. Therefore, the video-based interaction functions are enriched, and the video interaction experience of the user is improved.

### BRIEF DESCRIPTION OF THE DRAWINGS

The accompanying drawings, which are incorporated herein and form a part of this specification, illustrate embodiments consistent with the present disclosure and serve to explain the principles of the disclosure together with the specification.

To illustrate the technical solutions in the embodiments of the present disclosure or in the prior art more clearly, a brief introduction is presented below to the accompanying drawings required for describing the embodiments or the prior art. Apparently, those of ordinary skill in the art may further derive other drawings from these accompanying drawings without creative efforts.
FIG. 1 is a flowchart of a method of video processing according to an embodiment of the present disclosure;
FIG. 2 is a schematic diagram of a first playback page according to an embodiment of the present disclosure;
FIG. 3 is a schematic diagram of a second playback page according to an embodiment of the present disclosure;
FIG. 4 is a flowchart of another method of video processing according to an embodiment of the present disclosure;
FIG. 5 is a schematic diagram of another first playback page according to an embodiment of the present disclosure;
FIG. 6 is a structural schematic diagram of an apparatus for video processing according to an embodiment of the present disclosure; and
FIG. 7 is a structural schematic diagram of a video processing device according to an embodiment of the present disclosure.

### DETAILED DESCRIPTION

In order to more clearly understand the foregoing objects, features and advantages of the present disclosure, the solutions of the present disclosure will be further described below. It should be noted that the embodiments of the present disclosure and the features of the embodiments can be combined with each other without conflict.

Many specific details are set forth in the following description to provide a thorough understanding of the disclosure. However, the disclosure may further be implemented otherwise than as described herein. Apparently, the embodiments in the specification are only a part rather than all of the embodiments of the present disclosure.

With the continuous development of video processing technology, people have increasingly diversified demands for video-related functions. Therefore, how to enrich video-related functions, meet more demands of users and thereby improve user experience is an urgent technical problem to be solved.

To this end, an embodiment of the present disclosure provides a method of video processing. First of all, in response to a preset trigger operation on a first playback page corresponding to a first video, playback progress of the first video is obtained, and a second playback page is displayed; then, the first video continues to be played based on the playback progress in a preset playback window on the second playback page; and a related recommended video list of the first video is presented in a preset area on the second playback page, wherein the related recommended video list of the first video includes at least one recommended video corresponding to the first video. Therefore, in the embodiment of the present disclosure, the related recommended video list of the first video is presented while the first video is played, so that a user may browse the related recommended video of the first video in the process of watching the first video. Thus, video-based interaction functions are enriched, and the video interaction experience of the user is improved.

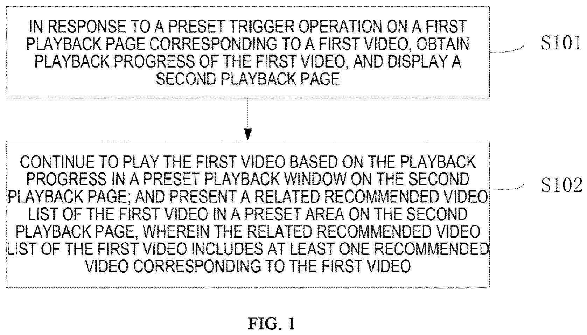

Based on this, an embodiment of the present disclosure provides a method of video processing. With reference to FIG. 1, this figure is a flowchart of a method of video processing according to an embodiment of the present disclosure. The method includes:

S101: in response to a preset trigger operation on a first playback page corresponding to a first video, obtaining playback progress of the first video and displaying a second playback page.

The method of video processing provided in the embodiments of the present disclosure may be applied to a client, for example, the client may include a client deployed in a smartphone, a client deployed in a tablet computer, and the like.

In the embodiments of the present disclosure, the first video may be any video, and specifically, the first video may be any video in any video stream.

In the embodiments of the present disclosure, the preset trigger operation on the first playback page corresponding to the first video may include a trigger operation in a preset trigger area on the first playback page, such as an upward sliding operation. In some embodiments, the preset trigger area on the first playback page may be, for example, a title area, and correspondingly, the trigger operation in the preset trigger area on the first playback page may be, for example, an upward sliding operation in the title area of the first video.

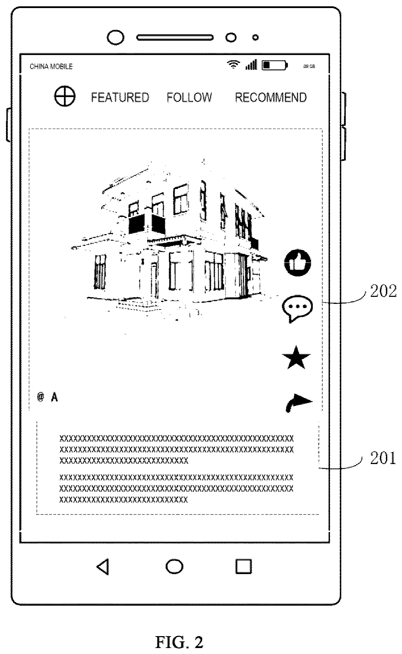

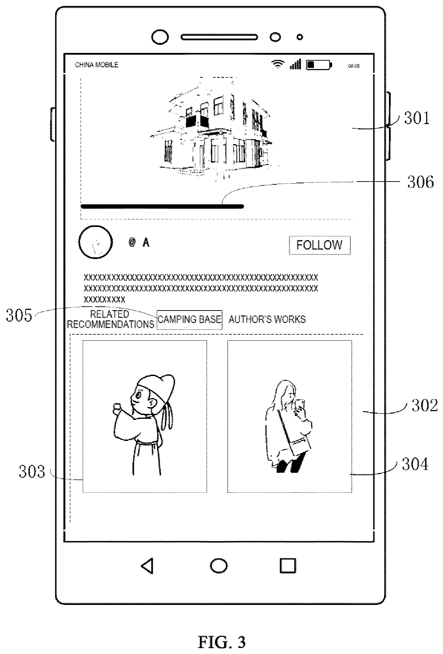

FIG. 2 is a schematic diagram of a first playback page according to an embodiment of the present disclosure. Upon receiving an upward sliding operation in a title area 201 of a first video, current playback progress of the first video is obtained, for example, 1 minutes 20 seconds, and a second playback page is displayed. FIG. 3 is a schematic diagram of displaying a second playback page according to an embodiment of the present disclosure.

In an optional implementation, trigger prompt information for the preset trigger area on the first playback page may also be presented in the preset trigger area. For example, a prompt "slide upward to view related recommendations" may be displayed in order to prompt a current user to obtain play progress of the first video through the preset trigger operation on the first playback page, and display the second playback page.

In an optional implementation, to further enrich video-based interaction functions, a mask page may also be displayed on the first playback page corresponding to the first video. Correspondingly, the preset trigger operation on the first playback page of the first video may be a trigger operation on the mask page to realize the function of obtaining the playback progress of the first video and displaying the second playback page. In some embodiments, the trigger operation on the mask page may include an upward sliding operation on the mask page.

S102: continuing to play the first video based on the playback progress in a preset playback window on the second playback page; and presenting a related recommended video list of the first video in a preset area on the second playback page.

In some embodiments, the related recommended video list of the first video includes at least one recommended video corresponding to the first video.

In the embodiments of the present disclosure, in the process of playing the first video on the first playback page, the obtaining of the playback progress of the first video and the display of the second playback page is triggered through the preset trigger operation on the first playback page, and then the first video continues to be played based on the playback progress in the preset playback window on the second playback page.

For example, upon receiving a preset trigger operation on the first playback page, it is assumed that the obtained playback progress of the first video is 1 to 20 seconds, and then the first video continues to be played from 1 to 20 seconds within a preset playback window 301 on the second playback page shown in FIG. 3. The embodiments of the present disclosure are not intended to limit a display position and a display style of the preset playback window. For example, the display position of the preset playback window may be set at a preset upper position of the second playback page.

In an optional implementation, when switching the first playback page to display the second playback page, in order to improve the immersive experience of the user watching the first video, upon receiving a preset trigger operation on the first playback page, first, the playback progress of the first video is obtained, then, a window in which the first video is played on the first playback page is reduced to the preset playback window on the second playback page, and the first video continues to be played based on the playback progress.

As shown in FIG. 2, in the process of playing the first video on the first playback page based on a window 202, upon receiving a preset trigger operation on the first playback page, the playback progress of the first video is obtained first, then the window 202 in which the first video is played is reduced to the preset playback window 301 in FIG. 3, and the first video continues to be played based on the playback progress.

In the embodiments of the present disclosure, in the preset playback window on the second playback page, when the first video continues to be played based on the playback progress, the related recommended video list of the first video may be presented in the preset area on the second playback page.

In the embodiments of the present disclosure, a recommended video in the related recommended video list of the first video is presented in the preset area on the second playback page. In some embodiments, the recommended video in the related recommended video list of the first video may be a video determined from a video resource of a server based on a content label of the first video. For example, assuming that the content label of the first video includes "travel" and "history", the related recommended video of the first video may include a preset quantity of videos having "travel" content labels and "historical" content labels.

In an optional implementation, the recommended video in the related recommended video list of the first video may further include a preset quantity of hot videos related to the first video. For example, assuming that the video content of the first video is a pet video, the recommended video in the related recommended video list stream of the first video may include a preset quantity of pet-related videos with a high playback popularity during a preset time period.

In practical application, in order to facilitate presentation of each recommended video in the related recommended video list of the first video, when the related recommended video list of the first video is presented in the preset area on the second playback page, a cover of the recommended video in the related recommended video list of the first video may be presented in a double-column style within the preset area.

As shown in FIG. 3, the related recommended video list of the first video is displayed in a preset area 302 on the second playback page. In some embodiments, the related recommended video list of the first video may include a cover 303 of a recommended video A and a cover 304 of a recommended video B.

In an optional implementation, when the related recommended video list of the first video is presented in the preset area on the second playback page, the cover of the recommended video in the related recommended video list of the first video may be presented in a single-column style within the preset area. For example, the cover of the recommended video may be presented in the left of the preset area, and theme information corresponding to the cover of the recommended video may be presented in the right of the preset area, so as to facilitate the user to select the recommended video to be played based on the cover and the theme information.

It should be noted that the embodiments of the present disclosure are not intended to limit the presentation style of the cover of the recommended video on the video recommendation page.

In practical application, when the related recommended video list of the first video is presented in the preset area on the second playback page, the user may trigger to slide the related recommended video list of the first video in the preset area through a preset sliding operation in the preset area, so that the user may browse the recommended video in the related recommended video list of the first video in the process of watching the first video. In some embodiments, the preset sliding operation may include an upward sliding operation, a downward sliding operation, or the like.

Since the quantity of recommended videos included in the related recommended video list of the first video is limited, when it is detected that the last recommended video in the related recommended video list of the first video is presented in the preset area, prompt information may be presented at the bottom of the preset area, so as to prompt the user that there are no more recommended videos currently. Thus, the user experience is improved.

In the method of video processing provided by the embodiments of the present disclosure, first, in response to a preset trigger operation on a first playback page corresponding to a first video, playback progress of the first video is obtained, and a second playback page is displayed; then, the first video continues to be played based on the playback progress in a preset playback window on the second playback page; and a related recommended video list of the first video is presented in a preset area on the second playback page, wherein the related recommended video list of the first video includes at least one recommended video corresponding to the first video. Therefore, in the embodiments of the present disclosure, the related recommended video list of the first video is presented while the first video is played, so that the user may browse the related recommended video of the first video in the process of watching the first video. Therefore, the video-based interaction functions are enriched, and the video interaction experience of the user is improved.

In practical application, in the process of presenting the related recommended video list of the first video in the preset area on the second playback page, any recommended video in the related recommended video list of the first video may be played through a selection operation on the recommended video, which facilitates the user to watch the desired recommended video on the second playback page.

Specifically, when the selection operation on a target recommended video in the related recommended video list of the first video is received, the first video is switched to the target recommended video for playback in the preset playback window on the second playback page, and the related recommended video list of the first video is switched to the related recommended video list of the target recommended video for presentation in the preset area.

In the embodiments of the present disclosure, the target recommended video may be any recommended video in the related recommended video list of the first video. Specifically, when a selection operation on any recommended video in the related recommended video list of the first video is received, the recommended video is determined as a target recommended video, and the first video is switched to the recommended video for playback within the preset playback window.

In the embodiments of the present disclosure, the selection operation on the target recommended video may include a click operation, a long-press operation, and the like on the target recommended video, which is not limited in the embodiments of the present disclosure.

In the embodiments of the present disclosure, the related recommended video list of the target recommended video may include at least one recommended video corresponding to the target recommended video. In some embodiments, the recommended video in the related recommended videos list of the target recommended video may be a video determined from a video resource of the server based on a label feature of the target recommended video. For example, assuming that the label of the target recommended video includes "historical buildings", the recommended videos corresponding to the target recommended video may include a preset quantity of videos with the label "historical buildings".

In an optional implementation, the recommended videos in the related recommended video list of the target recommended video may further include a preset quantity of hot videos related to the target recommended video. For example, assuming that the video content of the target recommended video is a scenery video, the recommended videos in the related recommended video list of the target recommended video may include a preset quantity of scenery-related videos with a relatively high playback popularity within a preset time period.

As shown in FIG. 3, when a click operation on the cover 303 of the recommended video A in the related recommended video list of the first video is received, the recommended video A is determined as the target recommended video, the first video is switched to the target recommended video for playback within the preset playback window 301, and the related recommended video list of the first video is switched to the related recommended video list of the target recommended video for presentation within the preset area 302. In some embodiments, the related recommended video list of the target recommended video may include at least one recommended video corresponding to the target recommended video (i.e., the recommended video A), for example, the recommended video A1 and the recommended video A2.

In an optional implementation, to facilitate the user to intuitively see the playback progress of the first video presented in the preset playback window 301, a progress bar component 306 may also be presented in the preset playback window 301, which facilitates the user to intuitively see the playback progress of the first video based on the progress bar component 306.

In an optional implementation, when the first video is played in the preset playback window 301 on the second playback page, control components corresponding to the preset playback window 301 may also be triggered to be presented completely through a click operation in the preset playback window 301, such as a speed playback control component, a full-screen display component, or the like. The user may adjust the playback progress, the display manner, and the like of the first video based on the respective control components.

In the embodiments of the present disclosure, when the related recommended video list of the first video is presented in the preset area on the second playback page, through the selection operation on the target recommended video in the related recommended video list of the first video, the first video may be switched to the target recommended video for playback in the preset playback window on the second playback page and the related recommended video list of the first video may be switched to the related recommended video list of the target recommended video for presentation in the preset area. Thus, the video-based interaction functions are enriched, and the video playback experience of the user is improved.

In practical application, in order to further enrich the video-based interaction functions and improve the video watching experience of the user, at least one recommendation label corresponding to the first video may also be set on the second playback page. In some embodiments, the recommendation label has a correspondence with a recommendation dimension corresponding to the first video, so that the user may implement presentation of the recommended video in different dimensions based on the recommendation label.

In the embodiments of the present disclosure, the recommendation dimension corresponding to the first video may include a content label dimension of the first video, a publishing user dimension of the first video, and the like. In some embodiments, a content label dimension of the first video may correspond to a plurality of content labels, and each content label corresponds to one recommendation label, that is, a content label dimension of the first video corresponds to a plurality of recommendation labels. For example, assuming that the content label of the first video includes "camping base" and "spring scenery", the recommendation label corresponding to the content label dimension of the first video includes a "camping base" recommendation label and a "spring scenery" recommendation label.

In the embodiments of the present disclosure, when the selection operation on the target recommendation label in the at least one recommendation label is received, the related recommended video list of the first video is switched to the recommended video list corresponding to the target recommendation label for presentation in the preset area on the second playback page.

In the embodiments of the present disclosure, the selection operation for the target recommendation label may include a click operation on the target label, etc.

In the embodiments of the present disclosure, the recommended video list corresponding to the target recommendation label may include at least one recommended video determined based on the target recommendation label, and specifically, the recommended video in the recommended video list corresponding to the target recommendation label may be a video determined from the video resource of the server based on the target recommendation label. For example, assuming that the target recommendation label is a "camping base" recommendation label, the recommended video determined based on the target recommendation label may include a preset quantity of videos labeled "camping base" within a preset time period.

As shown in FIG. 3, when a click operation on a "camping base" recommendation label 305 is received, the "camping base" recommendation label 305 is determined as the target recommendation label, and the related recommended video list of the first video is switched to the recommended video list corresponding to the "camping base" within the preset area 302 on the second playback page. The recommended video list corresponding to the "camping base" may include recommended videos C1 and C2 with a label name "camping base", and the like.

In an optional implementation, as shown in FIG. 3, when the related recommended video list of the first video is presented in the preset area 302 on the second playback page, the related recommended video list of the first video currently being displayed may be switched to the recommended video list corresponding to the "camping base" through a left sliding operation in the preset area 302.

Correspondingly, assuming that the content currently displayed in the preset area 302 on the second playback page is the recommended video list corresponding to the "camping base", the recommended video list corresponding to the "camping base" may be switched to the related recommended video list of the first video through a rightward sliding operation in the preset area 302.

In the embodiments of the present disclosure, at least one recommendation label corresponding to the first video is provided on the second playback page, and the function of updating the recommended video corresponding to the first video is realized through the selection operation for the target recommendation label in the at least one recommendation label. Thus, the video-based interaction functions are further enriched, and the video playback experience of the user is improved.

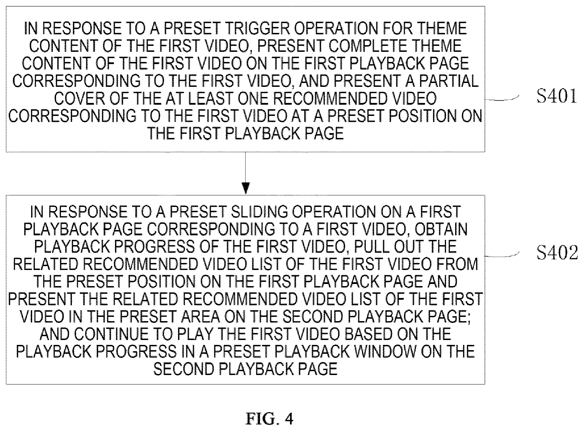

Based on the foregoing embodiments, an embodiment of the present disclosure further provides a method of video processing. Referring to FIG. 4, this figure is a flowchart of another method of video processing according to an embodiment of the present disclosure.

S401: in response to a preset trigger operation for theme content of the first video, presenting complete theme content of the first video on a first playback page corresponding to the first video, and presenting, at a preset position on the first playback page, a partial cover of at least one recommended video corresponding to the first video.

In the embodiments of the present disclosure, the preset trigger operation for the theme content of the first video may include a click operation on the theme content, and the like. In addition, a presentation area corresponding to the theme content may further display an "expand" control, and correspondingly, the preset trigger operation for the theme content of the first video may include a click operation on the "expand" control, etc.

In an optional implementation, the at least one recommended video corresponding to the first video may be a preset quantity of videos determined from the video resource of the server based on the label content of the first video. For example, assuming that the label of the first video includes "travel" and "history", the recommended video corresponding to the first video may include a preset quantity of videos having "travel" labels and "history" labels.

In an optional implementation, when the preset trigger operation for the theme content of the first video is received, the complete theme content of the first video may also be presented in the form of a mask page on the first playback page corresponding to the first video. Since the mask page has preset transparency, when the complete theme of the first video is presented in the form of the mask page, the normal playback of the first video may not be affected, that is, the user may still watch the first video in the playback state.

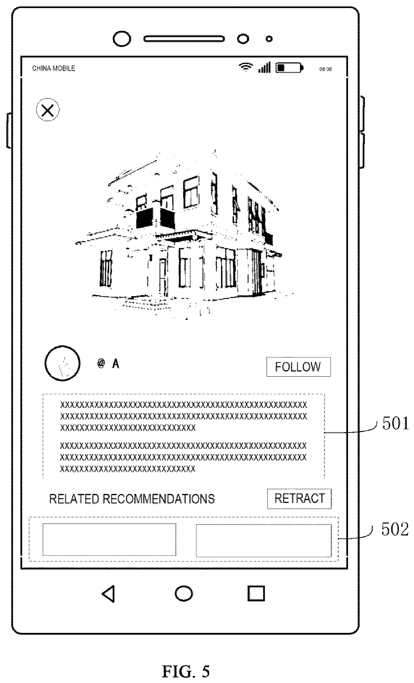

For example, as shown in FIG. 2, when a click operation on the "expand" control 202 of the first playback page is received, the mask page is displayed on the first playback page, and the complete theme content of the first video is presented on the mask page. As shown in FIG. 5, this figure is a schematic diagram of another first playback page according to an embodiment of the present disclosure, wherein complete theme content 501 of the first video is displayed on a mask page of the first playback page, and a partial cover of the at least one recommended video corresponding to the first video is displayed at a preset position 502 on the first playback page.

In the embodiments of the present disclosure, the preset position on the first playback page may include a preset bottom position, top position, left position, or right position on the first playback page, which is not limited in the embodiments of the present disclosure.

In an optional implementation, in order to make the user have a certain expectation for switching from the first playback page to the second playback page, the partial cover of the at least one recommended video corresponding to the first video may be displayed at a preset bottom position of the first playback page. Subsequently, when the preset trigger operation on the first playback page corresponding to the first video is received, the related recommended video list of the first video may be pulled out from the preset bottom position on the first playback page and presented in the preset area on the second playback page, thereby improving the user experience.

In practical application, when the complete theme content of the first video is presented on the first playback page, and the partial cover of the at least one recommended video corresponding to the first video is presented at a preset position on the first playback page, the presentation of the complete theme content of the first video and the partial cover of the recommended video may be exited through a preset return operation on the first playback page.

In the embodiments of the present disclosure, the preset return operation on the first playback page may be a click operation on the complete theme content of the first video, a click operation on a blank area on the first playback page, or a click operation on a "retract" control of the first playback page, which is not limited in the embodiments of the present disclosure. For example, as shown in FIG. 5, when a click operation on a "retract" control 503 is received, the first playback page shown in FIG. 2 is returned to.

S402: in response to a preset sliding operation on a first playback page corresponding to the first video, obtaining playback progress of the first video, pulling out a related recommended video list of the first video from the preset position on the first playback page and presenting the related recommended video list of the first video in a preset area on the second playback page; and continuing to play the first video based on the playback progress in a preset playback window on the second playback page.

In the embodiments of the present disclosure, when the complete theme content of the first video and the partial cover of the at least one recommended video corresponding to the first video are presented on the first playback page, the playback progress of the first video may be obtained through the preset trigger operation on the first playback page corresponding to the first video, and the related recommended video list of the first video is pulled out from the preset position on the first playback page and presented in the preset area on the second playback page, thereby realizing the display effect of smoothly switching from the first playback page of the first video to the second playback page. Further, the first video continues to be played based on the playback progress in the preset playback window on the second playback page.

In the embodiments of the present disclosure, the preset trigger operation on the first playback page corresponding to the first video may include an upward sliding operation on the complete theme content of the first playback page.

In the embodiments of the present disclosure, the related recommended video list of the first video may include at least one recommended video corresponding to the first video.

For example, as shown in FIG. 4, when the upward sliding operation on the complete theme content 501 of the first playback page is received, the related recommended video list of the first video is pulled from the preset position 502 on the first playback page and presented in the preset area 302 on the second playback page shown in FIG. 3, and the first video continues to be played in the preset playback window 301.

In an optional implementation, trigger prompt information for the preset trigger area may also be presented in a preset trigger area on the first playback page. For example, a prompt "slide upward to view related recommendations" may be displayed, to prompt the current user to obtain the playback progress of the first video through the preset trigger operation on the first playback page and display the second playback page.

In the embodiments of the present disclosure, in the process of playing the first video on the first playback page, the complete theme information of the first video may be presented on the first playback page through the preset trigger operation for the theme content of the first video, and then the first playback page presenting the complete theme information is switched to the second playback page, and the recommended video corresponding to the first video is presented on the second playback page. This facilitates the user to play the recommended video on the second playback page based on the demand, thereby enriching the video-based interaction functions and improving the video playback experience of the user.

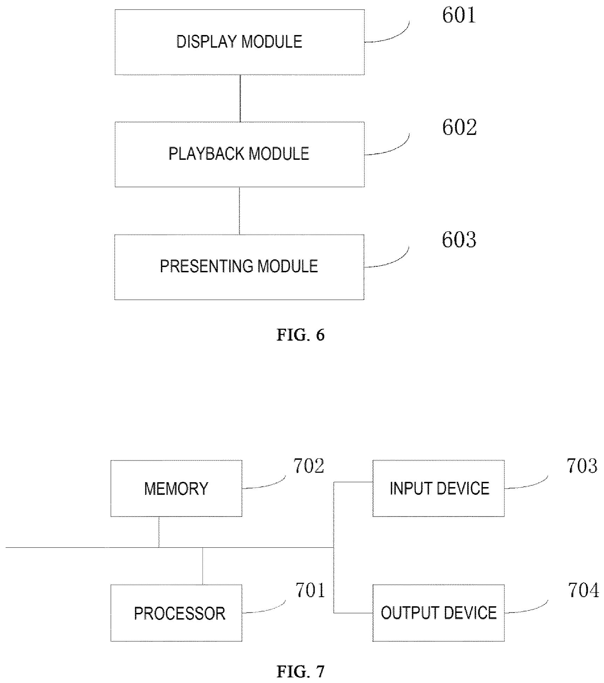

Based on the foregoing method embodiments, the present disclosure further provides a apparatus for video processing. Referring to FIG. 6, this figure is a schematic structural diagram of a apparatus for video processing according to an embodiment of the present disclosure. The apparatus comprises:
a display module 601 configured to, in response to a preset trigger operation on a first playback page corresponding to a first video, obtain playback progress of the first video, and display a second playback page;
a playback module 602 configured to continue to play the first video based on the playback progress in a preset playback window on the second playback page; and
a presenting module 603 configured to present a related recommended video list of the first video in a preset area on the second playback page, wherein the related recommended video list of the first video includes at least one recommended video corresponding to the first video.

In an optional implementation, the apparatus further includes:
a video switching module configured to, in response to a selection operation for a target recommended video in a related recommended video list of the first video, switch playback from the first video to the target recommended video in the preset playback window; and
a first list switching module configured to switch presentation from the related recommended video list of the first video to a related recommended video list of the target recommended video in the preset area, wherein the related recommended video list of the target recommended video includes at least one recommended video corresponding to the target recommended video.

In an optional implementation, the playback module includes:
a display reducing submodule configured to reduce display of a window on the first playback page, in which the first video is played, to a preset playback window on the second playback page, and continue to play the first video based on the playback progress.

In an optional implementation, at least one recommendation label corresponding to the first video is provided on the second playback page, the apparatus further including:
a second list switching module configured to, in response to a selection operation for a target recommendation label in the at least one recommendation label, switch presentation from the related recommended video list of the first video to a recommended video list corresponding to the target recommendation label in the preset area on the second playback page, wherein the recommended video list corresponding to the target recommendation label includes at least one recommended video determined based on the target recommendation label.

In an optional implementation, the apparatus further includes:
a presenting module configured to, in response to a preset trigger operation for theme content of the first video, present complete theme content of the first video on the first playback page corresponding to the first video, and present a partial cover of the at least one recommended video corresponding to the first video at a preset position on the first playback page.

In an optional implementation, the playback module further includes:
a list presenting submodule configured to, in response to a preset sliding operation on a first playback page corresponding to a first video, pull out the related recommended video list of the first video from the preset position on the first playback page and present the related recommended video list of the first video in a preset area on the second playback page.

In an optional implementation, the apparatus further includes:
a sliding-presenting module configured to, in response to a preset sliding operation in the preset area, slide-present the related recommended video list of the first video in the preset area.

In the apparatus for video processing provided by the embodiments of the present disclosure, first, in response to a preset trigger operation on a first playback page corresponding to a first video, playback progress of the first video is obtained, and a second playback page is displayed; then, the first video continues to be played based on the playback progress in a preset playback window on the second playback page; and a related recommended video list of the first video is presented in a preset area on the second playback page, wherein the related recommended video list of the first video includes at least one recommended video corresponding to the first video. Therefore, in the embodiments of the present disclosure, the related recommended video list of the first video is presented while the first video is played, so that the user may browse the related recommended video of the first video in the process of watching the first video. Therefore, the video-based interaction functions are enriched, and the video interaction experience of the user is improved.

In addition to the described method and apparatus, an embodiment of the present disclosure further provides a computer-readable storage medium. The computer-readable storage medium stores instructions which, when running on a terminal device, cause the terminal device to implement the method of video processing of the embodiments of the present disclosure.

An embodiment of the present disclosure further provides a computer program product, including a computer program/instruction. The computer program/instruction, when executed by a processor, implements the method of video processing of the embodiments of the present disclosure.

In addition, an embodiment of the present disclosure further provides a video processing device. Referring to FIG. 7, the device may include:
a processor 701, a memory 702, an input device 703, and an output device 704. There may be one or more processors 701 in the resource object processing device. In FIG. 7, one processor is used as an example. In some embodiments of the present disclosure, the processor 701, the memory 702, the input device 703, and the output device 704 may be connected via a bus or in another manner, wherein the connection via a bus is taken as an example in FIG. 7.

The memory 702 may be configured to store a software program and a module, and the processor 701 executes various function applications and data processing of the video processing device by running the software program and the module stored in the memory 702. The memory 702 may mainly include a program storage area and a data storage area, wherein the program storage area may store an operating system, an application program required by at least one function, etc. In addition, the memory 702 may include a high-speed random access memory, and can further include a non-volatile memory, for example, at least one magnetic disk storage device, a flash memory device, or other volatile solid-state storage device. The input device 703 may be configured to receive input digital or character information and generate signal inputs related to user settings and function controls of the video processing device.

Specifically, in this embodiment, the processor 701 loads an executable file corresponding to the process of one or more application programs into the memory 702 according to the following instruction, and the processor 701 runs the application programs stored in the memory 702, thereby implementing various functions of the foregoing video processing device.

It should be noted that, as used herein, relational terms such as "first" and "second" are merely used to distinguish one entity or operation from another entity or operation, and do not necessarily require or imply any actual relationship or sequence between these entities or operations. Furthermore, the terms "comprise", "include" or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by "including a ..." does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but is to be in accord with the widest scope consistent with the principles and novel features disclosed herein.

## Claims

1. A method of video processing, comprising:
in response to a preset trigger operation on a first playback page corresponding to a first video, obtaining playback progress of the first video, and displaying a second playback page;
continuing to play the first video based on the playback progress in a preset playback window on the second playback page; and
presenting a related recommended video list of the first video in a preset area on the second playback page, wherein the related recommended video list of the first video comprises at least one recommended video corresponding to the first video.

2. The method of claim 1, further comprising:
in response to a selection operation for a target recommended video in a related recommended video list of the first video, switching playback from the first video to the target recommended video in the preset playback window; and
switching from presenting the related recommended video list of the first video to a related recommended video list of the target recommended video in the preset area, wherein the related recommended video list of the target recommended video comprises at least one recommended video corresponding to the target recommended video.

3. The method of claim 1, wherein continuing to the play the first video based on the playback progress in the preset playback window on the second playback page comprises:
reducing display of a window on the first playback page, in which the first video is played, to a preset playback window on the second playback page, and continuing to play the first video based on the playback progress.

4. The method of claim 1, wherein at least one recommendation label corresponding to the first video is provided on the second playback page, the method further comprising:
in response to a selection operation for a target recommendation label in the at least one recommendation label, switching from presenting the related recommended video list of the first video to a recommended video list corresponding to the target recommendation label in the preset area on the second playback page, wherein the recommended video list corresponding to the target recommendation label comprises at least one recommended video determined based on the target recommendation label.

5. The method of claim 1, wherein before obtaining the playback progress of the first video in response to the preset trigger operation on the first playback page corresponding to the first video, the method further comprises:
in response to a preset trigger operation for theme content of the first video, presenting complete theme content of the first video on the first playback page corresponding to the first video, and presenting a partial cover of the at least one recommended video corresponding to the first video at a preset position on the first playback page.

6. The method of claim 5, wherein presenting the related recommended video list of the first video in the preset area on the second playback page comprises:
in response to a preset sliding operation on a first playback page corresponding to a first video, pulling out the related recommended video list of the first video from the preset position on the first playback page and presenting the related recommended video list of the first video in the preset area on the second playback page.

7. The method of claim 1, further comprising:
in response to a preset sliding operation in the preset area, sliding-presenting the related recommended video list of the first video in the preset area.

8. An apparatus for video processing, comprising:
a display module configured to, in response to a preset trigger operation on a first playback page corresponding to a first video, obtain playback progress of the first video, and display a second playback page;
a playback module configured to continue to play the first video based on the playback progress in a preset playback window on the second playback page; and
a presenting module configured to present a related recommended video list of the first video in a preset area on the second playback page, wherein the related recommended video list of the first video comprises at least one recommended video corresponding to the first video.

9. A computer-readable storage medium, wherein the computer-readable storage medium stores instructions thereon which, when running on a terminal device, cause the terminal device to implement a method of any of claims 1 to 7.

10. A video processing device, comprising: a memory, a processor, and a computer program stored on the memory and runnable on the processor, wherein the computer program, when executed by the processor, implements a method of any of claims 1 to 7.
